# EUROPEAN PATENT SPECIFICATION

(11) **EP 1 881 714 B1**
(45) Date of publication and mention of the grant of the patent: **27.10.2010**
(21) Application number: 07112885.4
(22) Date of filing: 20.07.2007
(51) Int. Cl.: H04W 76/02, H04W 4/06

(54) **Method for group calling, Relay-MSC and Anchor-MSC**
Verfahren für Gruppenanrufe, Relais-MSC und Anker-MSC
Procédé pour appels de groupe, MSC relais et MSC ancre

(30) Priority: 21.07.2006 CN 200610099244
(43) Date of publication of application: 23.01.2008
(73) Proprietor: Huawei Technologies Co., Ltd., Longgang District, Shenzhen Guangdong 518129 (CN)
(72) Inventor: WANG, Baoyi Intellectual Property Department, Shenzhen Guangdong 518129 (CN)
(74) Representative: Kreuz, Georg Maria

(56) References cited:
- WO-A-2005/055632
- WO-A-2005/107095
- 3GPP: "3GPP TS 43.068 v7.4.0 (2006-06) 3rd Generation Partnership Project; Technical Specification Group Core Network and Terminals; Voice Group Call Service (VGCS); Stage 2 (Release 7)" 3GPP, [Online] 13 June 2006 (2006-06-13), pages 1-149, XP002455411 Retrieved from the Internet: URL:http://www.3gpp.org/ftp/Specs/html-inf o/43068.htm> [retrieved on 2007-10-16]

## Description

The present application claims the priority of CN Application No. 200610099244.5 filed on Jul.21, 2006, titled "METHOD FOR IDENTIFYING A RELAY MSC WHERE A CALLING SERVICE SUBSCRIBER IS LOCATED BY THE ANCHOR MSC".

### Field of the Invention

The present invention relates to the technical field of trunking communications, in particular, to a method for identifying a Relay MSC, and a method and a device for group calling.

### Background of the Intention

Voice Group Call Service (VGCS) is adapted to realize the function of "multiple people speaking and multiple people listening"; Voice Broadcast Service (VBS) is a special case of VGCS, which can realize the function of "one people speaking and multiple people listening", in other words, in this service, there may be only one speaker, but there may be infinite listeners. In the VGCS service and VBS service, a point-to-multipoint voice communication is realized, in which some people speak and multiple people listen, so that the limitations of the point-to-point communication may be overcome and a call may be set up rapidly.

In the 3rd Generation Partnership Project (3GPP) Protocol (3GPP: "3GPP TS 43.068 v7.4.0 (2006-06) 3rd Generation Partnership Project; Technical Specification Group Core Network and Terminals: Voice Group Call Service (VGCS); Stage 2 (Release 7)"), when a calling service subscriber initiates a group call in a Relay Mobile Switching Center (MSC), the Relay MSC obtains the address of an Anchor MSC from a Group Call Register (GCR), thereby selects an inter-office routing, constructs a call setup message by using a group call reference as the called number and the calling number, and sends the message to the Anchor MSC. The Anchor MSC knows that a group call is initiated by analyzing the called number, and obtains attribute data of the group call and a Relay MSC list by inquiring the GCR. Then the Anchor MSC sends a preparing group call message (PREPARE_GROUP_CALL) to the Relay MSC for setting up a connection from the Anchor MSC to the Relay MSC.

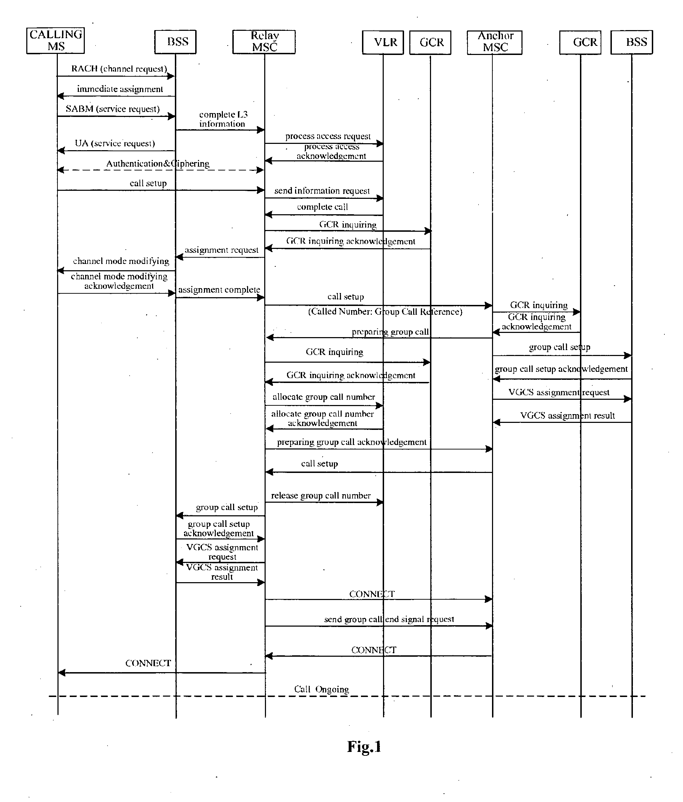

As shown in Figure 1, a calling service subscriber initiates a request for setting up a group call, a calling Mobile Station (MS) sends a channel request message (CHAN_REQ) to a Base Station Subsystem (BSS) via a Random Access CHannel (RACH), and the BSS returns an immediate assignment message (IMM_ASS) for allocating an Standalone Dedicated Control Channel (SDCCH) to the calling MS.

The calling MS sends an Set Asynchronous Balanced Mode (SABM) frame carrying a service request message (SERV_REQ) to the BSS on the SDCCH channel and after the BSS receives the SABM frame, it returns a Unnumbered Acknowledge (UA) frame to the calling MS, which indicates that the BSS has received the service request message.

The service request message (SERV_REQ) carries information such as the IMSI (International Mobile Subscriber Identity) of the calling MS, the service type, and so on.

The BSS sends complete L3 information (COM_L3_INFO) carrying the service request message (SERV_REQ) reported by the calling MS to the Relay MSC. After that, the Relay MSC checks on a VLR (Visited Location Register) via a process access request message (PROC_ACC_REQ) whether the subscriber that requests to initiate the call is a valid subscriber. The VLR returns a process access acknowledgement message (PROC_ACC_ACK) to the Relay MSC and notifies the Relay MSC of the check result.

If the identity of the subscriber that initiates the call is valid, the Relay MSC performs Authentication & Ciphering on the calling MS.

The calling MS initiates a call setup request (SETUP) to the Relay MSC, wherein the called number carried in the message is a Group ID. After the Relay MSC receives the call setup request, it checks whether the calling MS has subscribed for a group call service and checks the Group ID to be initiated via a send information request message (SEND_INFO_OUT) to the VLR. If the check on the VLR is passed, i.e., the calling MS is a subscriber that has subscribed for the group call service and the requested Group ID is valid, the VLR returns a complete call message (COMPLETE_CALL), which also carries the data that the calling MS has subscribed for, to the Relay MSC.

The Relay MSC inquires the state of the group call to be initiated and the attribute data of the group call from the GCR via a GCR inquiring message (GCR_INT). Wherein the data recorded in the GCR include: the group call state (idle or in operation), the cell list, the Anchor MSC address, etc. The GCR returns the inquiry result to the Relay MSC via a GCR inquiring acknowledgement message (GCR_INT_ACK). If a group call is in operation, the Relay MSC will reject the corresponding call initiated by the service subscriber.

The Relay MSC sends an assignment request message (ASS_REQ) to the BSS so as to allocate a bearer channel to the calling MS.

the calling MS is enabled to access the channel via a channel mode modifying message (CH_MOD_MODIFY) and a channel mode modifying acknowledgement message (CH_MOD_MODIFY_ACK) between the BSS and the calling MS, and the BSS notifies the Relay MSC via an assignment complete message (ASS_COMP) that the assignment for the calling MS is completed.

The Relay MSC sends a call setup message (SETUP) to the Anchor MSC for requesting to set up a connection from the Relay MSC to the Anchor MSC, wherein the called number carried in the message is the group call reference.

After the Anchor MSC receives the call setup request, the Anchor MSC sends a GCR inquiring message to the GCR where the Anchor MSC is located, for inquiring the state of the group call to be initiated and the attribute data of the group call. The data recorded in the GCR include: the group call state (idle or in operation), the cell list, the attribute data of the group call, the dispatcher list, the Relay MSC list, etc. The GCR returns the inquiry result to the Anchor MSC via a GCR inquiring acknowledgement message.

The Anchor MSC sends a preparing group call message (PREPARE_GROUP_CALL) to the Relay MSC in the Relay MSC list, wherein the message includes the group call reference and the attribute data of the group call (the encryption algorithm, priority and Codec information), and the Anchor MSC starts to set up a connection to the Relay MSC with the preparing group call message.

The Relay MSC sends a GCR inquiring message to the GCR where the Relay MSC is located, for inquiring the state of the group call to be initiated and the attribute data of the group call. The data recorded in the GCR include: the group call state (idle or in operation), the cell list, and the Anchor MSC address. The GCR returns the inquiry result to the Relay MSC via a GCR inquiring acknowledgement message.

During this process, the Anchor MSC sends a VGCS setup message (VGCS_SETUP) to the BSS for requesting to set up a call control connection, and the BSS notifies the Anchor MSC that the setup of the call control connection is completed via a VGCS setup acknowledgement message (VGCS_SETUP_ACK), and the Anchor MSC starts to allocate resources to each cell.

The Anchor MSC requests the BSS to assign a group call channel to the cell via a VGCS assignment request message (VGCS_ASS_REQ). The BSS returns a VGCS assignment result message (VGCS_ASS_RESULT) to the Anchor MSC and notifies the Anchor MSC that a group call channel is successfully assigned to the cell.

The Relay MSC requests the VLR to allocate a group call number via an allocate group call number message (ALLOCATE_GROUP CALL_NUMBER). The VLR sends an allocate group call number acknowledgement message (ALLOCATE_GROUP CALL_NUMBER_ACK) to the Relay MSC and returns a group call number.

The Relay MSC sends a preparing group call acknowledgement message (PREPARE_GROUP CALL_ACK) to the Anchor MSC. After the Anchor MSC receives the message, it sends a ISUP Setup message to the Relay MSC.

After the Relay MSC receives the ISUP Setup message from the Anchor MSC, the Relay MSC sends a release group call number message (RELEASE_GROUP_CALL_NUMBER) to the VLR to release the group call number.

The Relay MSC sends a group call setup message to the BSS for setting up a call control connection to a base station controller, and the BSS responds with a VGCS setup acknowledgement message to the Relay MSC indicating that the setup of the call control connection is completed. After the Relay MSC receives the message, it starts to allocate resources to the cell, such as an A Interface Circuit and a group call channel.

The Relay MSC requests the BSS to assign a group call channel to the cell via a VGCS assignment request message. The BSS returns a VGCS assignment result message to the Relay MSC for notifying the Relay MSC that a group call channel is successfully assigned to the cell.

After the Relay MSC completes the group call setup in this Relay MSC, the Relay MSC sends a connect message (CONNECT) to the Anchor MSC and completes the setup of ISUP connection, and sends a send group call end signal request message (SEND_GROUP_CALL_END_SIGNAL_REQ) to the Anchor MSC indicating that the Relay MSC has completed setting up the group call. After the Anchor MSC receives the message, it sends the connect message to the Relay MSC, and the Relay MSC sends the connect message to the calling MS. Up to this point, the setup of the group call is completed.

According to the prior art, when a service subscriber initiates a group call/broadcast call in a Relay MSC, if the Relay MSC fails to set up the group call, the Anchor MSC is not able to identify that the Relay MSC which fails to set up the group call is the Relay MSC where the calling service subscriber is located, so the Anchor MSC is not able to determine whether to remove the group call, and the call can only be removed when the internal timer of the Anchor MSC times out. During this period of time, all the resources used by the call continue to be occupied. Therefore, a lot of A Interface Circuits and radio channel resources are wasted.

### Summary of the Invention

According to an embodiment of the invention, there is provided a method for group calling, so that the process in which a calling service subscriber initiates a group call in a Relay MSC in the 3GPP protocol may be perfected, and the setup of an unreasonable group call may be avoided.

According to another embodiment of the invention, there is provided a method for identifying the Relay MSC where a calling service subscriber is located, so that the Anchor MSC is able to identify the Relay MSC where the calling service subscriber is located.

According to another embodiment of the invention, there is provided a Relay MSC device, so that the process in which a calling service subscriber initiates a group call in a Relay MSC in the 3GPP protocol may be perfected, and the setup of an unreasonable group call may be avoided.

According to another embodiment of the invention, there is provided an Anchor MSC device, which is able to identify the Relay MSC where the calling service subscriber is located.

A method for group calling according to an embodiment of the invention, including:
constructing a call setup message by using a Relay MSC number as a calling number by the Relay MSC, so that the Anchor Mobile Switching Center may identify the Relay Mobile Switching Center where the calling service subscriber is located when a calling service subscriber initiates a group call in the Relay MSC; and
sending the call setup message to an Anchor MSC.

A Relay MSC device according to an embodiment of the invention, including a message sending unit and a message receiving unit. Wherein, the Relay MSC device further includes:
a message constructing unit, which is adapted to construct a call setup message by using the Relay MSC number as a calling number when the message receiving unit receives a group call initiated by a calling service subscriber in the Relay Mobile Switching Center, so that the Anchor Mobile Switching Center may identify the Relay Mobile Switching Center where the calling service subscriber is located, and delivering the constructed call setup message to the message sending unit.

An Anchor MSC device according to an embodiment of the invention, including:
a message receiving unit, which is adapted to receive a message from a Relay MSC;
an inquiring unit, which is adapted to inquire a GCR according to a group call reference and obtain a Relay MSC list, when the message receiving unit receives a call setup message initiated in the Relay MSC, wherein a calling number in the call setup message includes a number of the Relay MSC, so that the Anchor Mobile Switching Center may identify the Relay Mobile Switching Center where the calling service subscriber is located, and a called number includes a group call reference;
a message sending unit, which is adapted to send a preparing group call message to each Relay MSC in the Relay MSC list so as to set up a connection from the Anchor MSC to the Relay MSC in the Relay MSC list;
a Relay MSC identifying unit, which is adapted to identify the Relay MSC where the calling service subscriber is located according to the call setup message.

Because in the call setup message constructed by the Relay MSC and sent to the Anchor MSC, the Relay MSC number is used as the calling number, the Anchor MSC may identify the Relay MSC where the calling service subscriber is located when receiving the call setup message. During the subsequent setup process of the group call, if the Relay MSC fails to set up the group call, the Anchor MSC may remove the group call in time, so that it may be avoided to set up an unreasonable group call or to waste the system resources, and the process in which a calling service subscriber initiates a group call in a Relay MSC in the 3GPP protocol may be perfected.

### Brief Description of the Drawings

Figure 1 is a signaling flow chart of the process in which a calling service subscriber initiates a group call in a Relay MSC defined in the existing 3GPP protocol:

Figure 2 is a flow chart of the method for identifying the Relay MSC according to an embodiment of the invention;

Figure 3 is a signaling flow chart of the method for group calling according to an embodiment of the invention;

Figure 4 is another signaling flow chart of the method for group calling according to an embodiment of the invention;

Figure 5 is another signaling flow chart of the method for group calling according to an embodiment of the invention;

Figure 6 is another signaling flow chart of the method for group calling according to an embodiment of the invention;

Figure 7 is a functional block diagram of the Relay MSC device according to an embodiment of the invention; and

Figure 8 is a functional block diagram of the Anchor MSC device according to an embodiment of the invention.

### Detailed Description of the Embodiments

In the embodiments of the invention, when a calling service subscriber initiates a group call in a Relay MSC, the Relay MSC uses the Relay MSC number as the calling number when it constructs a call setup message that is to be sent to an Anchor MSC, so that the Anchor MSC may identify the Relay MSC where the calling service subscriber is located when receiving the group call setup message. Thus, during the subsequent group call setup process, if the Relay MSC where the calling service subscriber is located fails to set up the group call, the Anchor MSC is able to remove the group call in time.

The method according to the embodiments of the invention will now be described in detail in conjunction with the drawings.

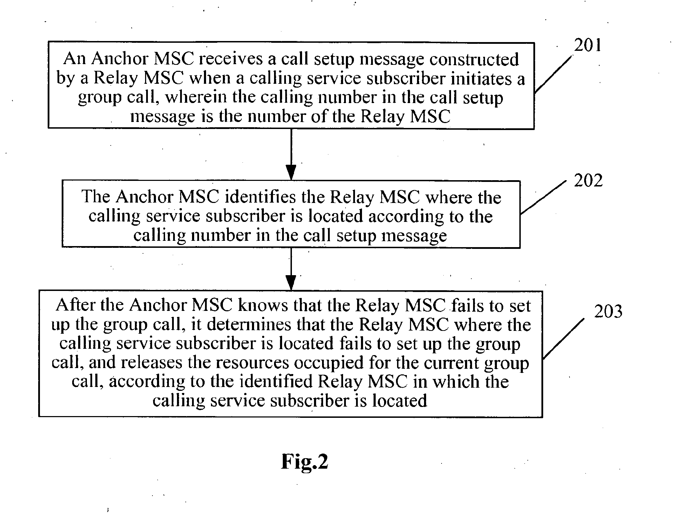

Referring to Figure 2, it is a flow chart of the method for identifying a Relay MSC according to an embodiment of the invention. Wherein:

First of all, in step 201, an Anchor MSC receives a call setup message constructed by a Relay MSC when a calling service subscriber initiates a group call, wherein the calling number in the call setup message is the number of the Relay MSC.

In step 202, the Anchor MSC identifies the Relay MSC where the calling service subscriber is located according to the calling number in the call setup message.

Thus, during the group call setup process, once the Anchor MSC knows that the Relay MSC fails to set up the group call, it may remove the call which is being set up according to the identified Relay MSC where the calling service subscriber is located. The resources occupied for setting up the current call, including the A Interface Circuit, the radio channel, the trunk circuit between the Anchor MSC and Relay MSC, etc. are also released.

In step 203, when the Anchor MSC knows that a Relay MSC fails to set up the group call, the Anchor MSC determines that it is the Relay MSC where the calling service subscriber is located fails to set up the group call, and removes the call which is being set up.

For example, when the Anchor MSC receives the preparing group call failure message sent from the Relay MSC, it may determine that the Relay MSC fails to set up the group call; or when the Anchor MSC receives the call remove message sent from the Relay MSC, it may determine that the Relay MSC fails to set up the group call.

Hereinafter the group call setup process according to the embodiments of the invention will be illustrated in detail.

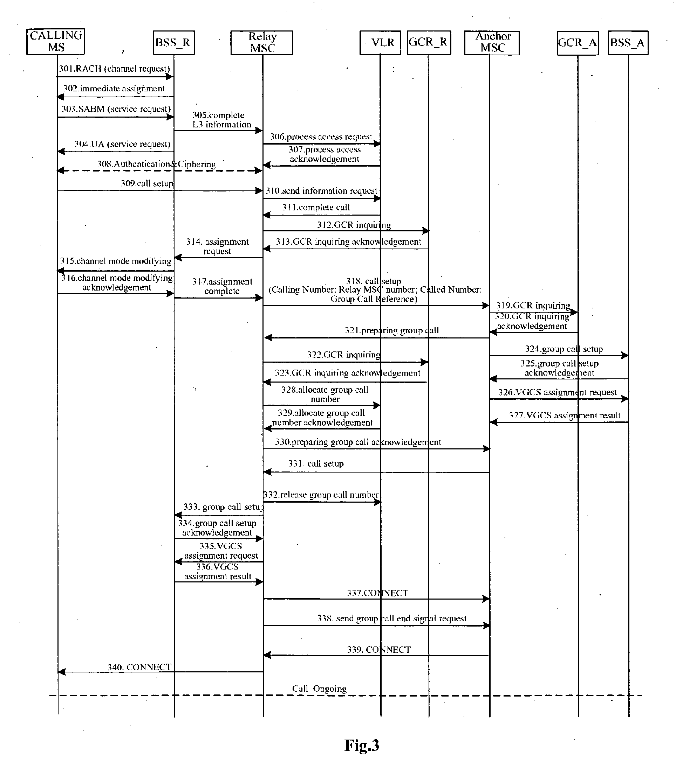

Figure 3 shows a signaling flow of the method for group calling, wherein the calling service subscriber initiates a request for setting up a group call.

301. A calling MS sends a channel request message to a BSS_R via an RACH (Random Access CHannel);

302. The BSS_R returns an immediate assignment message for allocating an SDCCH (Standalone Dedicated Control Channel) to the calling MS;

303. The calling MS sends an SABM (Set Asynchronous Balanced Mode) frame containing a service request message to the BSS_R on the SDCCH;

304. After the BSS_R receives the SABM frame, the BSS_R returns a UA (Unnumbered Acknowledge) frame to the terminal, which indicates that the BSS_R has received the service request message;

Wherein, the service request message carries information such as the IMSI of the calling MS, the service type, etc.

305. the BSS_R sends a complete L3 information message, which carries the service request message reported by the calling MS, to the Relay MSC;

306. The Relay MSC checks whether the subscriber that requests to initiate the call is a valid subscriber in the VLR via a process access request message;

307. The VLR notifies the Relay MSC of the check result via a process access acknowledgement message;

308. If the identity of the subscriber who initiates the call is valid, the Relay MSC performs Authentication & Ciphering on the calling MS;

309. The calling MS initiates a call setup message to the Relay MSC for requesting to set up a call, wherein the called number carried in the message is a Group ID.

310. After the Relay MSC receives the call setup request, it checks in the VLR whether the calling MS has subscribed for a group call service and checks the Group ID to be initiated via a send information request message;

311. If the check in the VLR is passed, in other words, the calling MS is a subscriber that has subscribed for the group call service and the requested Group ID is valid, the VLR returns a complete call message, which also carries the subscription data of the calling MS, to the Relay MSC;

312. The Relay MSC inquires the state of the group call to be initiated and the attribute data of the group call from the GCR_R via a GCR inquiring message, wherein the data recorded in the GCR_R include: the group call state (idle or in operation), the cell list, the Anchor MSC address and so on;

313. The GCR_R returns the inquiry result to the Relay MSC via a GCR inquiring acknowledgement message, and if a group call is in operation, the Relay MSC will reject the corresponding call initiated by the service subscriber;

314. The Relay MSC sends an assignment request message to the BSS_R for allocating a bearer channel to the calling MS;

315.-316.: The calling MS is enabled to access the channel via a channel mode modifying message and a channel mode modifying acknowledgement message between the BSS_R and the calling MS;

317. The BSS_R notifies the Relay MSC via an assignment complete message that the assignment of calling MS is completed;

318. The Relay MSC sends a call setup message to the Anchor MSC for notifying the Anchor MSC to set up a group call, wherein the called number carried in the message is a group call reference, and the calling number is the Relay MSC number;

319.-320.: After the Anchor MSC receives the call setup request, it sends a GCR inquiring message to the GCR_A where the Anchor MSC is located, for inquiring the state of the group call to be initiated and the attribute data of the group call, wherein the data recorded in the GCR_A include: the group call state (idle or in operation), the cell list, the attribute data of the group call, the dispatcher list, the Relay MSC list, etc.; the GCR_A returns the inquiry result to the Anchor MSC via a GCR inquiring acknowledgement message;

321. The Anchor MSC sends a preparing group call message to all the Relay MSCs in the Relay MSC list, wherein the message includes: the group call reference, and the attribute data of the group call (encryption algorithm, priority, Codec information). The Anchor MSC starts to set up a connection to the Relay MSC with the message;

322. The Relay MSC sends a GCR inquiring message to the GCR_R where the Relay MSC is located for inquiring the state of the group call to be initiated, wherein the data recorded in the GCR_R include: the group call state (idle or in operation), the cell list and the Anchor MSC address;

323. The GCR_R returns the inquiry result to the Relay MSC via a GCR inquiring acknowledgement message;

If a group call is being set up, the Relay MSC rejects the corresponding call initiated by the service subscriber;

324.-325.: During this process, the Anchor MSC sends a group call setup message to the BSS_A for requesting to set up a call control connection, the BSS_A notifies the Anchor MSC that the setup of the call control connection is completed via a VGCS setup acknowledgement message, and the Anchor MSC starts to allocate resources to each cell;

326. The Anchor MSC requests the BSS_A to assign a group call channel via a VGCS assignment request message;

327. The BSS_A returns a VGCS assignment result message to the Anchor MSC for notifying that a group call channel is successfully assigned to the cell;

328. The Relay MSC requests the VLR to allocate a group call number via an allocate group call number message;

329. The VLR returns a group call number to the Relay MSC via an allocate group call number acknowledgement message;

330. The Relay MSC sends a preparing group call acknowledgement message to the Anchor MSC;

331. After the Anchor MSC receives the message, it sends a call setup message to the Relay MSC;

332. After the Relay MSC receives the call setup message from the Anchor MSC, it sends a release group call number message to the VLR for releasing the group call number;

333. The Relay MSC sends a group call setup message to the BSS_R for setting up a call control connection to a base station controller;

334. The BSS_R sends a VGCS setup acknowledgement message to the Relay MSC indicating that the setup of the call control connection is completed; and when the Relay MSC receives the message, it starts to allocate resources to the cell, such as an A Interface Circuit and a group call channel;

335. The Relay MSC requests the BSS_R to assign a group call channel to the cell via a VGCS assignment request message;

336. The BSS_R sends a VGCS assignment result message to the Relay MSC for notifying the Relay MSC that a group call channel is successfully assigned;

337.-338. After the setup of the group call is completed, the Relay MSC sends a connect message to the Anchor MSC and completes the setup of inter-office session connection, and sends a group call end signal request message to the Anchor MSC for indicating that the Relay MSC has completed setting up the group call;

339. After the Anchor MSC receives the message, it sends a connect message to the Relay MSC;

340. The Relay MSC sends the connect message to the calling MS, and up to this point, the setup of a group call is completed.

During the above process of a group call, the called number carried in the call setup message, via which the Relay MSC instructs the Anchor MSC to set up a group call, is a group call reference, and the calling number is a Relay MSC number. Thus, the Anchor MSC may identify the Relay MSC where the calling service subscriber is located when the call setup message is received. During the subsequent setup process of the group call, if the Relay MSC fails to set up the group call, the Anchor MSC may remove the group call in time, so that it may be avoided to set up an unreasonable group call or to waste the system resources, and the process in which a calling service subscriber initiates a group call in a Relay MSC in the 3GPP protocol may be perfected.

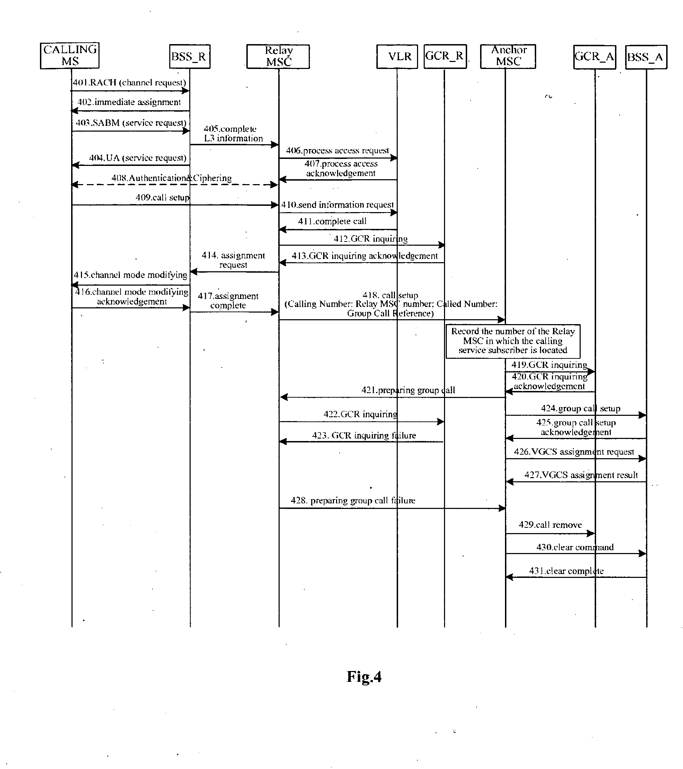

Figure 4 is a signaling flow chart of the method for group calling according to another embodiment of the invention, wherein:

Steps 401 to 418 are the same as the steps 301 to 318 of the embodiment shown in Figure 3;

After step 418, in other words, when the Anchor MSC receives the call setup message sent from the Relay MSC, the Anchor MSC needs to extract the calling number in the message and record it as the number of the Relay MSC where the calling service subscriber is located.

Steps 419 to 422 are the same as the steps 319 to 322 of the embodiment shown in Figure 3;

After step 422, in other words, when the Relay MSC sends a GCR inquiring message to the GCR_R where the Relay MSC is located, an internal abnormity occurs in the GCR_R where the Relay MSC is located, and the inquiry fails.

423. The GCR_R where the Relay MSC is located returns a GCR inquiring failure message to the Relay MSC;

Steps 424 to 427 are the same as the steps 324 to 327 of the embodiment shown in Figure 3;

428. After the Relay MSC receives the GCR inquiring failure message, it sends a preparing group call failure message to the Anchor MSC;

After the Anchor MSC receives the message, it determines that the Relay MSC that sends the message is the Relay MSC where the calling service subscriber is located, and removes the call which is being set up;

429. The Anchor MSC sends a call remove message to the GCR_A where the Anchor MSC is located;

430. The Anchor MSC sends a clear command message to the BSS_A, for releasing the call control connection between the Anchor MSC and the BSS and the resource control connection of each cell;

431. The BSS _A returns a clear complete message to the Anchor MSC.

Up to this point, the call remove is completed.

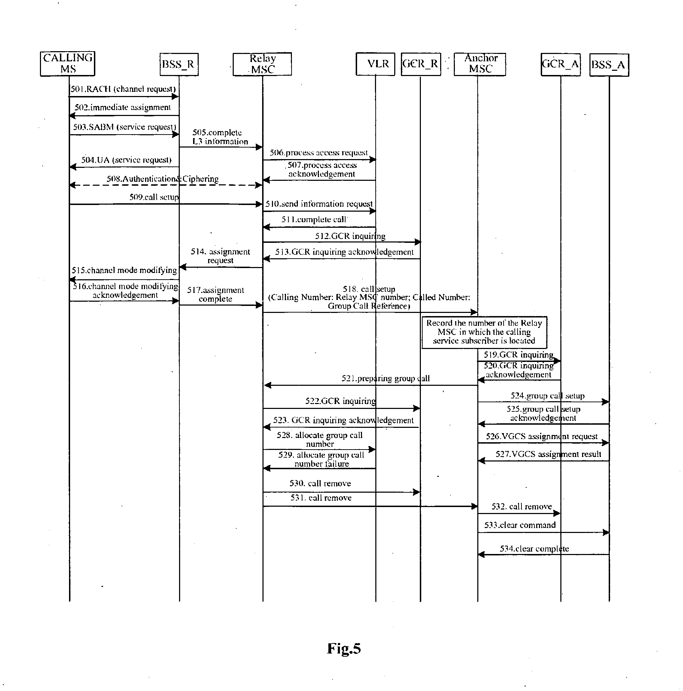

Referring to Figure 5, it is a signaling flow chart of the method for group calling according to another embodiment of the invention, wherein:

Steps 501 to 522 are the same as the steps 401 to 422 of the embodiment shown in Figure 4;

523. The GCR_R returns the inquiry result to the Relay MSC via a GCR inquiring acknowledgement message;

If a group call is in operation, the Relay MSC rejects the corresponding call initiated by the service subscriber;

Steps 524 to 527 are the same as the steps 424 to 427 of the embodiment shown in Figure 4;

528. The Relay MSC requests the VLR to allocate a group call number via an allocate group call number message;

529. At this point, no idle group call number is located in the VLR, and the VLR returns an allocate group call number failure message to the Relay MSC;

530 to 531. After the Relay MSC receives the allocate group call number failure message from the VLR, it sends a remove message to the GCR_R where the Relay MSC is located, and sends a remove message to the Anchor MSC on a common relay connection;

After the Anchor MSC receives the remove message, it determines that the Relay MSC that sends the message is the Relay MSC where the calling service subscriber is located, and the call which is being set up needs to be removed;

Steps 532 to 534 are the same as the steps 429 to 431 of the embodiment shown in Figure 4;

Up to this point, the call remove is completed.

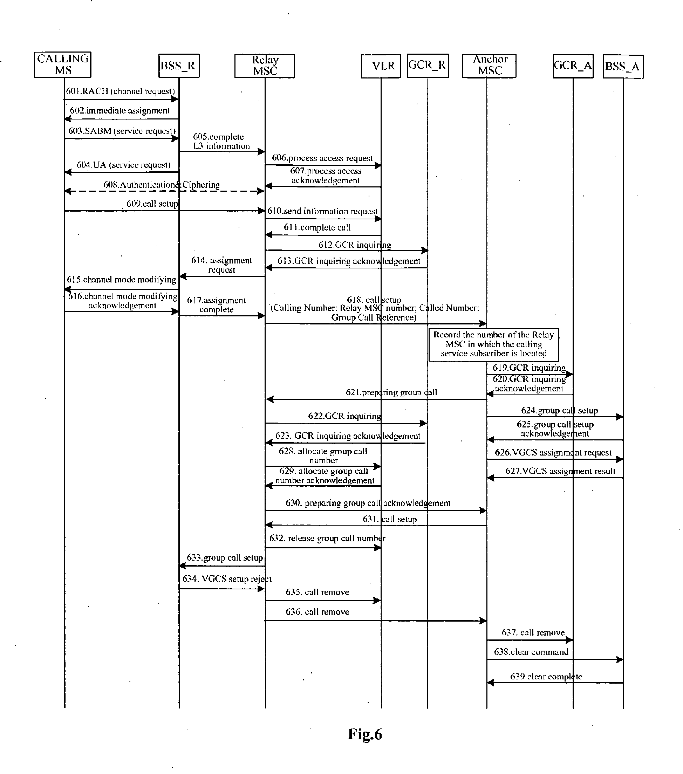

Referring to Figure 6, it is a signaling flow chart of the method for group calling according to another embodiment of the invention, wherein:

Steps 601 to 622 are the same as the steps 401 to 422 of the embodiment shown in Figure 4;

Steps 623 to 632 are the same as the steps 323 to 332 of the embodiment shown in Figure 3;

633. The Relay MSC sends a group call setup message to the BSS_R for setting up a call control connection to the base station controller;

634. At this point, the control resources in the BSS_R (including system resources such as CPU, memory and so on) are insufficient, and a VGCS setup reject message is returned to the Relay MSC;

635 to 636. After the Relay MSC receives the VGCS setup reject message from the BSS_R, it determines that the BSS_R that sends the message is the BSS where the service subscriber initiating the calling service is located, so the Relay MSC sends a call remove message to the GCR_R, and sends a remove message to the Anchor MSC on a common relay connection;

After the Anchor MSC receives the remove message, it determines that the Relay MSC that sends the message is the Relay MSC where the calling service subscriber is located, and the call which is being set up needs to be removed;

Steps 637 to 639 are the same as the steps 429 to 431 of the embodiment shown in Figure 4;

Up to this point, the call remove is completed.

It can be seen from the above processes shown in Figure 4 to Figure 6 that according to the embodiments of the invention, when a Relay MSC fails to set up a group call, the Anchor MSC may remove the call which is being set up, including the resources occupied for setting up the current call, according to the recorded number of the Relay MSC where the calling service subscriber is located, so that it may be avoided to set up an unreasonable group call, and system resources may be saved. In this solution, the process in which a calling service subscriber initiates a group call in a Relay MSC defined in 3GPP protocol may be perfected, so that the Anchor MSC can identify the Relay MSC where the calling service subscriber is located. When the setup fails during the subsequent setup process, the Anchor MSC may remove the group call in time, so as to avoid setting up an unreasonable group call.

Those of ordinary skill in the art may appreciate that all or a part of the steps in the methods according to the above embodiments may be implemented by instructing the related hardware via a program, wherein the program may be stored in a computer readable storage medium, such as ROM/RAM, magnetic disc, compact disk, etc.

In an embodiment of the invention, there is further provided an MSC device for setting up a group call, by means of which the Relay MSC number may be used as the calling number in a call setup message that is constructed by the Relay MSC and sent to the Anchor MSC, so that the Anchor MSC may identify the Relay MSC where the calling service subscriber is located when the call setup message is received. During the subsequent setup process of the group call, if the Relay MSC fails to set up the group call, the Anchor MSC is able to remove the group call in time, so that it may be avoided to set up an unreasonable group call and to waste the system resources, and the process in which a calling service subscriber initiates a group call in a Relay MSC in the 3GPP protocol may be perfected.

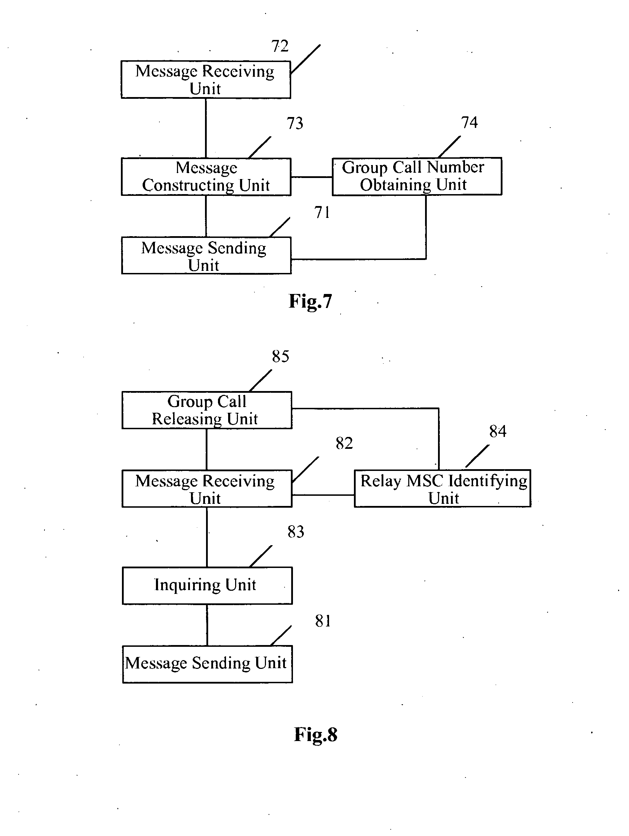

Referring To Figure 7, it is a block diagram showing the principle of the Relay MSC device according to the embodiments of the invention, wherein:

The Relay MSC device includes: a message sending unit 71, a message receiving unit 72 and a message constructing unit 73.

When the message receiving unit 72 receives a group call initiated by a calling service subscriber, the message constructing unit 73 uses the Relay MSC number as the calling number for constructing a call setup message, and delivers the constructed call setup message to the message sending unit 71; the message sending unit 71 sends the call setup message to an Anchor MSC.

In the Relay MSC device, a group call number obtaining unit 74 may also be arranged. When the message receiving unit 72 receives a preparing group call message sent from the Anchor MSC, the group call number obtaining unit 74 requests the VLR to allocate a group call number, and delivers the result of whether the group call number is obtained to the message sending unit 71. If the group call number obtaining unit 74 obtains the group call number allocated by the VLR, the message sending unit 71 returns a preparing group call acknowledgement message to the Anchor MSC; otherwise, the message sending unit 71 returns a preparing group call failure message to the Anchor MSC.

Referring to Figure 8, it is a block diagram showing the principle of the Anchor MSC device according to the embodiments of the invention.

The Anchor MSC device includes: a message sending unit 81, a message receiving unit 82, an inquiring unit 83 and a Relay MSC identifying unit 84.

After the message receiving unit 82 receives a call setup message (the calling number in the call setup message is the number of a Relay MSC, and the called number is a group call reference) from the Relay MSC, the inquiring unit 83 inquires the GCR according to the group call reference in the call setup message and obtains a Relay MSC list; then, the message sending unit 81 sends a preparing group call message to each Relay MSC in the Relay MSC list so as to set up a connection from the Anchor MSC to the Relay MSC in the Relay MSC list. In addition, the Relay MSC identifying unit 84 identifies the Relay MSC where the calling service subscriber is located according to the calling number in the call setup message (i.e., the number of the Relay MSC).

A group call releasing unit 85 may also be arranged In the Anchor MSC device. After the message receiving unit 82 receives a preparing group call failure message or a call remove message from the Relay MSC, the group call releasing unit 85 determines that the Relay MSC where the calling service subscriber is located fails to set up the group call, and removes the call which is being set up as well as the resources occupied in the setup of the current group call, according to the Relay MSC which is identified in the Relay MSC identifying unit 84 and where the calling service subscriber is located.

The detailed process in which the Anchor MSC device and the Relay MSC device sets up a group call according to this embodiment of the invention is similar to that of the method according to the aforementioned embodiments of the invention, so it will not be described again here.

Thus, it can be seen that by employing the MSC according to the embodiments of the invention, the process in which a calling service subscriber initiates a group call in a Relay MSC defined in the 3GPP protocol may be perfected, so that the Anchor MSC may identify the Relay MSC where the calling service subscriber is located; and when the setup fails in the subsequent setup process, the Anchor MSC may remove the group call in time, so that it may be avoided to set up an unreasonable group call.

Additional advantages and modifications will readily occur to those skilled in the art.

## Claims

1. A method for group calling, comprising:
constructing a call setup message by using a Relay Mobile Switching Center number as a calling number by the Relay Mobile Switching Center, so that the Anchor Mobile Switching Center may identify the Relay Mobile Switching Center where the calling service subscriber is located, when a calling service subscriber initiates a group call in the Relay Mobile Switching Center; and
sending the call setup message to an Anchor Mobile Switching Center.

2. The method according to claim 1, wherein the method further comprises:
identifying the Relay Mobile Switching Center where the calling service subscriber is located according to the calling number in the call setup message, when the Anchor Mobile Switching Center receives the call setup message from the Relay Mobile Switching Center.

3. The method according to claim 2, wherein the method further comprises:
requesting a Visited Location Register to allocate a group call number when the Relay Mobile Switching Center receives a preparing group call message sent from the Anchor Mobile Switching Center;
returning a preparing group call acknowledgement message to the Anchor Mobile Switching Center by the Relay Mobile Switching Center and continuing to set up the group call, when the group call number is successfully allocated; and
returning a preparing group call failure message to the Anchor Mobile Switching Center by the Relay Mobile Switching Center, if it fails to allocate the group call number.

4. The method according to claim 3, wherein the method further comprises:
determining, by the Anchor Mobile Switching Center, that the Relay Mobile Switching Center where the calling service subscriber is located fails to set up the group call, and releasing the group call which is being set up, when the Anchor Mobile Switching Center receives the preparing group call failure message sent from the Relay Mobile Switching Center.

5. The method according to claim 3, wherein the method further comprises:
determining, by the Anchor Mobile Switching Center, that the Relay Mobile Switching Center where the calling service subscriber is located fails to set up the group call, and releasing the call which is being set up, if the Relay Mobile Switching Center fails to set up the group call during a process of continuing to setup the group call.

6. The method according to claim 1, wherein the method further comprises:
receiving, by the Anchor Mobile Switching Center, the call setup message constructed by the Relay Mobile Switching Center when a calling service subscriber initiates a group call;
identifying, by the Anchor Mobile Switching Center, the Relay Mobile Switching Center where the calling service subscriber is located according to the calling number in the call setup message.

7. The method according to claim 6, wherein the method further comprises:
determining, by the Anchor Mobile Switching Center, that the Relay Mobile Switching Center where the calling service subscriber is located fails to set up the group call, and releasing the group call which is being set up, when the Anchor Mobile Switching Center receives a preparing group call failure message or a call remove message sent from the Relay Mobile Switching Center.

8. A Relay Mobile Switching Center device, comprising a message sending unit and a message receiving unit, wherein the Relay Mobile Switching Center device further comprises:
a message constructing unit, which is adapted to construct a call setup message by using the Relay Mobile Switching Center number as a calling number when the message receiving unit receives a group call initiated by a calling service subscriber in the Relay Mobile Switching Center, so that the Anchor Mobile Switching Center may identify the Relay Mobile Switching Center where the calling service subscriber is located, and delivering the constructed call setup message to the message sending unit.

9. The Relay Mobile Switching Center device according to claim 8, wherein the Relay Mobile Switching Center device further comprises:
a group call number obtaining unit, which is adapted to request a Visited Location Register to allocate a group call number when the message receiving unit receives a preparing group call message sent from an Anchor Mobile Switching Center, and deliver a result whether a group call number is obtained to the message sending unit.

10. An Anchor Mobile Switching Center device, comprising:
a message receiving unit, which is adapted to receive a message from a Relay Mobile Switching Center;
an inquiring unit, which is adapted to inquire a Group Call Register according to a group call reference and obtain a Relay Mobile Switching Center list, when the message receiving unit receives a call setup message initiated in the Relay Mobile Switching Center, wherein a calling number in the call setup message is a number of the Relay Mobile Switching Center, so that the Anchor Mobile Switching Center may identify the Relay Mobile Switching Center where the calling service subscriber is located;
a message sending unit, which is adapted to send a preparing group call message to each Relay Mobile Switching Center in the Relay Mobile Switching Center list so as to set up a connection from the Anchor Mobile Switching Center to the Relay Mobile Switching Center in the Relay Mobile Switching Center list;
wherein, the Anchor Mobile Switching Center further comprises:
a Relay Mobile Switching Center identifying unit, which is adapted to identify the Relay Mobile Switching Center where the calling service subscriber is located according to the call setup message.

11. The Anchor Mobile Switching Center device according to claim 10, wherein the Anchor Mobile Switching Center device further comprises:
a group call releasing unit, which is adapted to determine that the Relay Mobile Switching Center where the calling service subscriber is located fails to set up a group call, and remove the call which is being set up, when the message receiving unit receives a preparing group call failure message or a call remove message sent from the Relay Mobile Switching Center.

## Patentansprüche

1. Verfahren für Gruppenrufe, mit den folgenden Schritten:
Konstruieren einer Rufaufbaunachricht durch Verwenden der Nummer eines Relay Mobile Switching Center als eine anrufende Nummer durch das Relay Mobile Switching Center, so dass das Anchor Mobile Switching Center das Relay Mobile Switching Center, bei dem sich der anrufende Dienstteilnehmer befindet, identifizieren kann, wenn ein anrufender Dienstteilnehmer einen Gruppenruf in dem Relay Mobile Switching Center einleitet; und
Senden der Rufaufbaunachricht zu einem Anchor Mobile Switching Center.

2. Verfahren nach Anspruch 1, wobei das Verfahren ferner den folgenden Schritt umfasst:
Identifizieren des Relay Mobile Switching Center, bei dem sich der anrufende Dienstteilnehmer befindet, gemäß der anrufenden Nummer in der Rufaufbaunachricht, wenn das Anchor Mobile Switching Center die Rufaufbaunachricht von dem Relay Mobile Switching Center empfängt.

3. Verfahren nach Anspruch 2, wobei das Verfahren ferner die folgenden Schritte umfasst:
Anfordern von einem Visited Location Register, eine Gruppenrufnummer zu vergeben, wenn das Relay Mobile Switching Center eine von dem Anchor Mobile Switching Center gesendete vorbereitende Gruppenrufnachricht empfängt;
Zurückgeben einer vorbereitenden Gruppenruf-Bestätigungsnachricht an das Anchor Mobile Switching Center durch das Relay Mobile Switching Center und Fortsetzen des Aufbaus des Gruppenrufs, wenn die Gruppenrufnummer erfolgreich vergeben wird; und
Zurückgeben einer vorbereitenden Gruppenruf-Fehlschlagnachricht an das Anchor Mobile Switching Center durch das Relay Mobile Switching Center, wenn es die Gruppenrufnummer nicht vergibt.

4. Verfahren nach Anspruch 3, wobei das Verfahren ferner die folgenden Schritte umfasst:
Bestimmen durch das Anchor Mobile Switching Center, dass das Relay Mobile Switching Center, bei dem sich der anrufende Dienstteilnehmer befindet, den Gruppenruf nicht aufbaut, und Freigeben des Gruppenrufs, der gerade aufgebaut wird, wenn das Anchor Mobile Switching Center die von dem Relay Mobile Switching Center gesendete vorbereitende Gruppenruf-Fehlschlagnachricht empfängt.

5. Verfahren nach Anspruch 3, wobei das Verfahren ferner die folgenden Schritte umfasst:
Bestimmen durch das Anchor Mobile Switching Center, dass das Relay Mobile Switching Center, bei dem sich der anrufende Dienstteilnehmer befindet, den Gruppenruf nicht aufbaut, und Freigeben des Rufs, der gerade aufgebaut wird, wenn das Relay Mobile Switching Center den Gruppenruf während eines Prozesses des Fortsetzens des Aufbaus des Gruppenrufs nicht aufbaut.

6. Verfahren nach Anspruch 1, wobei das Verfahren ferner die folgenden Schritte umfasst:
Empfangen der durch das Relay Mobile Switching Center konstruierten Rufaufbaunachricht durch das Anchor Mobile Switching Center, wenn ein anrufender Dienstteilnehmer einen Gruppenruf einleitet;
Identifizieren des Relay Mobile Switching Center, bei dem sich der anrufende Dienstteilnehmer befindet, durch das Anchor Mobile Switching Center gemäß der anrufenden Nummer in der Rufaufbaunachricht.

7. Verfahren nach Anspruch 6, wobei das Verfahren ferner die folgenden Schritte umfasst:
Bestimmen durch das Anchor Mobile Switching Center, dass das Relay Mobile Switching Center, bei dem sich der anrufende Dienstteilnehmer befindet, den Gruppenruf nicht aufbaut, und Freigeben des Gruppenrufs, der gerade aufgebaut wird, wenn das Anchor Mobile Switching Center eine vorbereitende Gruppenruf-Fehlschlagnachricht oder eine Rufentfernungsnachricht, die von dem Relay Mobile Switching Center gesendet wird, empfängt.

8. Einrichtung eines Relay Mobile Switching Center mit einer Nachrichtensendeeinheit und einer Nachrichtenempfangseinheit, wobei die Einrichtung des Relay Mobile Switching Center ferner Folgendes umfasst:
eine Nachrichtenkonstruktionseinheit, die dafür ausgelegt ist, durch Verwendung der Nummer des Relay Mobile Switching Center als eine anrufende Nummer eine Rufaufbaunachricht zu konstruieren, wenn die Nachrichtenempfangseinheit einen durch einen anrufenden Dienstteilnehmer in dem Relay Mobile Switching Center eingeleiteten Gruppenruf empfängt, so dass das Anchor Mobile Switching Center das Relay Mobile Switching Center, bei dem sich der anrufende Dienstteilnehmer befindet, identifizieren kann, und Abliefern der konstruierten Rufaufbaunachricht an die Nachrichtensendeeinheit.

9. Einrichtung des Relay Mobile Switching Center nach Anspruch 8, wobei die Einrichtung des Relay Mobile Switching Center ferner Folgendes umfasst:
eine Gruppenruf-Nummernerhaltungseinheit, die dafür ausgelegt ist, von einem Visited Location Register anzufordern, eine Gruppenrufnummer zu vergeben, wenn die Nachrichtenempfangseinheit eine von einem Anchor Mobile Switching Center gesendete vorbereitende Gruppenrufnachricht empfängt, und ein Ergebnis, ob eine Gruppenrufnummer erhalten wird, an die Nachrichtensendeeinheit abzuliefern.

10. Einrichtung eines Anchor Mobile Switching Center, umfassend:
eine Nachrichtenempfangseinheit, die dafür ausgelegt ist, eine Nachricht von einem Relay Mobile Switching Center zu empfangen;
eine Abfrageeinheit, die dafür ausgelegt ist, ein Group Call Register gemäß einer Gruppenrufreferenz abzufragen und eine Liste von Relay Mobile Switching Centers zu erhalten, wenn die Nachrichtenempfangseinheit eine in dem Relay Mobile Switching Center eingeleitete Rufaufbaunachricht empfängt, wobei eine anrufende Nummer in der Rufaufbaunachricht eine Nummer des Relay Mobile Switching Center ist, so dass das Anchor Mobile Switching Center das Relay Mobile Switching Center identifizieren kann, bei dem sich der anrufende Dienstteilnehmer befindet;
eine Nachrichtensendeeinheit, die dafür ausgelegt ist, eine vorbereitende Gruppenrufnachricht zu jedem Relay Mobile Switching Center in der Liste von Relay Mobile Switching Centers zu senden, um so eine Verbindung von dem Anchor Mobile Switching Center zu dem Relay Mobile Switching Center in der Liste von Relay Mobile Switching Centers aufzubauen;
wobei das Anchor Mobile Switching Center ferner Folgendes umfasst:
eine Identifizierungseinheit für Relay Mobile Switching Centers, die dafür ausgelegt ist, gemäß der Rufaufbaunachricht das Relay Mobile Switching Center zu identifizieren, bei dem sich der anrufende Dienstteilnehmer befindet.

11. Einrichtung des Anchor Mobile Switching Center nach Anspruch 10, wobei die Einrichtung des Anchor Mobile Switching Center ferner Folgendes umfasst:
eine Gruppenruf-Freigabeeinheit, die dafür ausgelegt ist zu bestimmen, dass das Relay Mobile Switching Center, bei dem sich der anrufende Dienstteilnehmer befindet, einen Gruppenruf nicht aufbaut, und den Ruf, der gerade aufgebaut wird, zu entfernen, wenn die Nachrichtenempfangseinheit eine vorbereitende Gruppenruf-Fehlschlagnachricht oder eine Rufentfernungsnachricht, die von dem Relay Mobile Switching Center gesendet wird, empfängt.

## Revendications

1. Procédé d'appel groupé, comprenant :
la construction d'un message d'établissement d'appel en utilisant un numéro de Centre de Commutation de Services Mobiles Relais comme numéro d'appel par le Centre de Commutation de Services Mobiles Relais, de telle sorte que le Centre de Commutation de Services Mobiles de Rattachement puisse identifier le Centre de Commutation de Services Mobiles Relais où se trouve l'abonné au service d'appel,
quand un abonné au service d'appel lance un appel groupé dans le Centre de Commutation de Services Mobiles Relais ; et
l'envoi du message d'établissement d'appel à un Centre de Commutation de Services Mobiles de Rattachement.

2. Procédé selon la revendication 1, dans lequel le procédé comprend en outre :
l'identification du Centre de Commutation de Services Mobiles Relais où se trouve l'abonné au service d'appel en fonction du numéro d'appel dans le message d'établissement d'appel, quand le Centre de Commutation de Services Mobiles de Rattachement reçoit le message d'établissement d'appel en provenance du Centre de Commutation de Services Mobiles Relais.

3. Procédé selon la revendication 2, dans lequel le procédé comprend en outre :
la demande à un Enregistreur de Position Visitée d'allouer un numéro d'appel groupé ; quand le Centre de Commutation de Services Mobiles Relais reçoit un message de préparation d'appel groupé envoyé par le Centre de Commutation de Services Mobiles de Rattachement ;
le renvoi d'un message d'acquittement de préparation d'appel groupé au Centre de Commutation de Services Mobiles de Rattachement par le Centre de Commutation de Services Mobiles Relais et la continuation de l'établissement de l'appel groupé, quand le numéro d'appel groupé est correctement alloué ; et
le renvoi d'un message d'échec de préparation d'appel groupé au Centre de Commutation de Services Mobiles de Rattachement par le Centre de Commutation de Services Mobiles Relais si le numéro d'appel groupé n'est pas alloué correctement.

4. Procédé selon la revendication 3, dans lequel le procédé comprend en outre :
la détermination, par le Centre de Commutation de Services Mobiles de Rattachement, du fait que le Centre de Commutation de Services Mobiles Relais où se trouve l'abonné au service d'appel n'établit pas l'appel groupé, et la libération de l'appel groupé qui est en cours d'établissement, quand le Centre de Commutation de Services Mobiles de Rattachement reçoit le message d'échec de préparation d'appel groupé envoyé par le Centre de Commutation de Services Mobiles Relais.

5. Procédé selon la revendication 3, le procédé comprenant en outre :
la détermination, par le Centre de Commutation de Services Mobiles de Rattachement, du fait que le Centre de Commutation de Services Mobiles Relais où se trouve l'abonné au service d'appel n'établit pas l'appel groupé, et la libération de l'appel qui est en cours d'établissement, si le Centre de Commutation de Services Mobiles Relais n'établit pas l'appel groupé durant un processus de continuation d'établissement de l'appel groupé.

6. Procédé selon la revendication 1, le procédé comprenant en outre :
la réception, par le Centre de Commutation de Services Mobiles de Rattachement, du message d'établissement d'appel construit par le Centre de Commutation de Services Mobiles Relais quand un abonné au service d'appel lance un appel groupé ;
l'identification, par le Centre de Commutation de Services Mobiles de Rattachement, du Centre de Commutation de Services Mobiles Relais dans lequel se trouve l'abonné au service d'appel en fonction du numéro d'appel figurant dans le message d'établissement d'appel.

7. Procédé selon la revendication 6, le procédé comprenant en outre :
la détermination, par le Centre de Commutation de Services Mobiles de Rattachement, du fait que le Centre de Commutation de Services Mobiles Relais où se trouve l'abonné au service d'appel n'établit pas l'appel groupé, et la libération de l'appel groupé qui est en cours d'établissement, quand le Centre de Commutation de Services Mobiles de Rattachement reçoit un message d'échec de préparation d'appel groupé ou un message de suppression d'appel envoyé par le Centre de Commutation de Services Mobiles Relais.

8. Dispositif de Centre de Commutation de Services Mobiles Relais, comprenant une unité d'envoi de message et une unité de réception de message, le dispositif de Centre de Commutation de Services Mobiles Relais comprenant en outre :
une unité de construction de message, adaptée pour construire un message d'établissement d'appel en utilisant le numéro du Centre de Commutation de Services Mobiles Relais comme numéro d'appel quand l'unité de réception de message reçoit un appel groupé lancé par un abonné au service d'appel dans le Centre de Commutation de Services Mobiles Relais, de telle sorte que le Centre de Commutation de Services Mobiles de Rattachement puisse identifier le Centre de Commutation de Services Mobiles Relais où se trouve l'abonné au service d'appel, et la délivrance du message d'établissement d'appel construit à l'unité d'envoi de message.

9. Dispositif de Centre de Commutation de Services Mobiles Relais selon la revendication 8, le dispositif de Centre de Commutation de Services Mobiles Relais comprenant en outre :
une unité d'obtention de numéro d'appel groupé, adaptée pour demander à un Enregistreur de Position Visitée d'allouer un numéro d'appel groupé quand l'unité de réception de message reçoit un message de préparation d'appel groupé envoyé par un Centre de Commutation de Services Mobiles de Rattachement, et délivrer à l'unité d'envoi de message un résultat indiquant si un numéro d'appel groupé est obtenu ou non.

10. Dispositif de Centre de Commutation de Services Mobiles de Rattachement, comprenant :
une unité de réception de message, adaptée pour recevoir un message en provenance d'un Centre de Commutation de Services Mobiles Relais ;
une unité d'interrogation, adaptée pour interroger un Enregistreur d'Appel Groupé en fonction d'une référence d'appel groupé et obtenir une liste de Centres de Commutation de Services Mobiles Relais, quand l'unité de réception de message reçoit un message d'établissement d'appel lancé dans le Centre de Commutation de Services Mobiles Relais, un numéro d'appel dans le message d'établissement d'appel étant un numéro du Centre de Commutation de Services Mobiles Relais, de telle sorte que le Centre de Commutation de Services Mobiles de Rattachement puisse identifier le Centre de Commutation de Services Mobiles Relais où se trouve l'abonné au service d'appel ;
une unité d'envoi de message, adaptée pour envoyer un message de préparation d'appel groupé à chaque Centre de Commutation de Services Mobiles Relais figurant sur la liste de Centres de Commutation de Services Mobiles Relais de façon à établir une connexion entre le Centre de Commutation de Services Mobiles de Rattachement et le Centre de Commutation de Services Mobiles Relais dans la liste de Centres de Commutation de Services Mobiles Relais ;
dans lequel, le Centre de Commutation de Services Mobiles de Rattachement comprend :
une unité d'identification de Centre de Commutation de Services Mobiles Relais, adaptée pour identifier le Centre de Commutation de Services Mobiles Relais où se trouve l'abonné au service d'appel en fonction du message d'établissement d'appel.

11. Dispositif de Centre de Commutation de Services Mobiles de Rattachement selon la revendication 10, le dispositif de Centre de Commutation de Services Mobiles de Rattachement comprenant en outre :
une unité de libération d'appel groupé, adaptée pour déterminer que le Centre de Commutation de Services Mobiles Relais où se trouve l'abonné au service d'appel n'établit pas d'appel groupé, et supprimer l'appel qui est en cours d'établissement,
quand l'unité de réception de message reçoit un message d'échec de préparation d'appel groupé ou un message de suppression d'appel envoyé par le Centre de Commutation de Services Mobiles Relais.
